# EUROPEAN PATENT SPECIFICATION

(11) **EP 3 549 644 B1**
(45) Date of publication and mention of the grant of the patent: **09.12.2020**
(21) Application number: 19157774.1
(22) Date of filing: 18.02.2019
(51) Int. Cl.: A63B 41/04, F16K 15/20, B29D 30/06

(54) **VALVE UNIT FOR A VALVE OF AN INFLATABLE BODY**
VENTILEINHEIT FÜR EIN VENTIL EINES AUFBLASBAREN KÖRPERS
UNITÉ DE SOUPAPE D'UNE SOUPAPE DANS UN CORPS GONFLABLE

(30) Priority: 05.04.2018 DE 102018205119
(43) Date of publication of application: 09.10.2019
(73) Proprietor: Adidas AG, 91074 Herzogenaurach (DE)
(72) Inventor: BOUTEILLER, Jean-Jacques Nicolas, 91074 Herzogenaurach (DE)
(74) Representative: Wegner, Hans

(56) References cited:
- US-A- 2 183 900
- US-A1- 2009 118 756

## Description

### 1. Technical Field

The present invention relates to a valve unit for a valve of an inflatable bladder for a sports ball as well as to a valve, an inflatable bladder and a sports ball.

### 2. Technical Background

Inflatable bodies have a multitude of applications in modern manufacturing goods such as ball bladders, tire tubing, leisure activity equipment, floating devices, safety gear and many more. Mainly, this is due to superior cushioning and deformation properties as well as the capability to reversibly change the volume of the inflatable body by inflating or deflating the inflatable body.

A common feature of inflatable bodies is a valve that can be used to repeatedly fill the interior of the respective inflatable body with a certain type of gas such as air and that is configured to seal the interior of the respective inflatable body gas-tight.

Designing valves for inflatable bodies in such a way that the valve is easy to manufacture and to operate, long-lived and reliably gas-tight has remained a perpetual engineering task. In particular designing valves for bladders of sports balls such as footballs, basket balls and volley balls has remained challenging due to further requirements that need to be fulfilled by the respective valve such as a small footprint and low weight as well as an often desired smooth surface of the respective sports ball.

Fig.1 is taken from the US 7,517,194 B2 and illustrates a known valve design used for many common types of sports balls. The ball comprises an outer hull 10 that has an opening 11. A valve 30 is attached to the outer hull 10 and comprises a housing 31 and a valve unit 33. The valve unit 33 is arranged in the opening 11 of the hull 10 and is hold in place by the valve body 31. The valve unit 33 comprises a channel 333 that is configured to receive an inflating needle (not shown) to fill the interior of an inflatable bladder 22 with gas such as air. When the inflating needle is inserted into the valve unit 33 it widens the channel 333 such that the tip of the inflating needle can reach the interior of the inflatable bladder 22. After the inflating needle has been removed from the channel 333 the valve unit should close the channel gas-tight again such that no gas can leak from the interior of the inflatable bladder 22 through the channel 333 to the exterior.

Similar and related valve designs are well-known from the prior art for example from the EP 2 18 92 66 B1, the EP 00 13 434 B1, the JPH11244421A and the WO 2016 0 13210A1.

US 2,183,900 A discloses an inflating valve with an outer housing formed with an interior cylindrical chamber having end walls transverse of the axis of said chamber and an opening in each of said end walls; and a rubber valve core formed with a gas passage therethrough, said core snugly fitting within said chamber and having two walls arranged transversely of the axis of said chamber and engaging said end walls respectively, the distance between said transverse walls when said core is not longitudinally compressed being of normally greater length than the distance between said end walls, whereby, when said valve structure is assembled, said core is longitudinally compressed and shortened.

US 2009/0118756 A1 relates to an intra-gastric balloon designed to be implanted inside the stomach of a patient for the purpose of reducing the volume of the stomach by way of treatment for obesity.

However, the valve designs known form the prior art have several deficiencies. For example, to ensure gas-tight sealing some valve designs provide a strong pressure on the channel for the inflation needle and thereby exert a large friction on the inflation needle. As a consequence, it may be difficult to insert and remove the inflation needle. In some cases, this effect may even result in damage to the inflation needle, in particular during removal of the inflation needle from the valve.

In addition, some valve designs known form the prior art may suffer from gas leakage through the channel for the inflation needle and may easily wore out or even be irreversibly damaged by insertion of the inflation needle.

Thus, there remains a strong interest in a novel gas-tight valve design that is easy to operate, is less prone to be damaged by insertion of an inflation needle and remains operational over many duty cycles. Moreover, such valve design should be simple to manufacture at low cost.

### 3. Summary of the Invention

The above-mentioned problems are at least partly solved by the subject matter of the claimed invention, which is defined by the appended independent claims. Further embodiments of the claimed invention are described in the appended depended claims. Any "aspect", "embodiment", "example" etc. described in the following and not falling within the scope of the claimed invention thus defined is to be interpreted as background information provided to facilitate the understanding of the claimed invention.

In one embodiment, the present invention provides a valve unit for a valve of an inflatable body, in particular a bladder for a sports ball, wherein the valve unit comprises a cavity containing a viscous, non-solid material, the cavity being adapted to be repeatedly penetrated by a gas injector, wherein the viscous, non-solid material is adapted to seal the valve unit against gas leakage when the gas injector is not penetrating the cavity.

This embodiment ensures that the required gas-tight sealing function provided by the valve unit is supported by the viscous, non-solid material which provides superior sealing properties compared to the plastic and / or rubber material employed for this purpose by conventional valves.

Moreover, this embodiment allows to decouple the sealing function of the valve unit from its structural requirements and thus to optimize the valve design for inserting and removing a gas injector such as an inflation needle without adversely affecting the gas-tight sealing of the valve.

As a consequence, a valve comprising a valve unit according to the above embodiment can be operated (e.g. insertion and removal of an inflation needle) more safely and conveniently without risking irreversibly damaging the valve during operation.

The viscous non-solid material may comprise a gel and / or a silica gel. More specifically, the viscous, non-solid material may also comprise SiO₂ and Polyurethane. Such a viscous, non-solid material is easy to source and easy to process during manufacturing as well as nonhazardous in terms of health, environment and safety. However, other viscous materials of various compositions are possible as well. Further, according to the claimed invention, the viscous, non-solid material exhibits a viscosity at a temperature of 25°C in the range of 5,000 cSt to 100,000 cSt, corresponding to a range of 0,005 m²/s to 0,1 m²/s in SI units.

Such material ensures ease of penetration of the gas injector as well as fast and reliable gas tight sealing after the gas injector has been removed from the valve unit.

Further, the cavity may comprise at least a first wall section that can be penetrated by the gas injector and which seals the cavity against a leakage of the viscous, non-solid material, when the gas injector is not penetrating the at least first wall section.

Moreover, the at least first wall section may be arranged in between the cavity and the exterior of the inflatable body. There may also be a second wall section that is arranged in between the cavity and the interior of the inflatable body.

In some embodiments the first and / or the second wall section has a thickness of 0,25mm - 5mm, preferably 0,5mm - 4mm, more preferably 1mm - 3mm and most preferably between 1,5mm and 2,5mm.

For example, these embodiments ensure, that the viscous, non-solid material is well contained inside the cavity, in particular during operation of the valve. As a consequence, the valve unit is able to maintain its sealing properties over many duty cycles of operation.

A first channel and / or a second channel may be arranged in the at least first wall section and / or the at least second wall section, wherein the at least first channel connects the cavity to the exterior of the inflatable body and / or the second channel connects the cavity to the interior of the inflatable body. In particular, the at least first wall section and the at least second wall section may be arranged on opposite sections of the cavity.

For instance, in this way an efficient and simple mechanism is provided to guide the gas injector form the exterior of the inflatable body through the valve unit and through the cavity that contains the viscous, non-solid material towards the interior of the inflatable body.

In particular, it can thus be ensured, that the gas injector penetrates the cavity essentially along the center line of the valve unit. As a consequence, gas-tight sealing is enhanced and the risk to damage the valve unit reduced significantly.

In a further embodiment of the present invention, the viscous, non-solid material is contained in a preconfigured pad, wherein the preconfigured pad may be coated with thermoplastic polyurethane, TPU.

For example, this embodiment facilitates mass production of the valve unit provided by the present invention, since the viscous, non-solid material can be produced and packed into the pad prior to assembly of the valve unit.

Consequently, the assembly process of the valve unit is less complex and can be optimized independently from the manufacturing of the pad that contains the viscous, non-solid material. Moreover, the preconfigured pads may be already available form third-party suppliers and /or the manufacturing of the preconfigured pads may be performed by specialized manufacturers.

In a further embodiment of the present invention, the viscous, non-solid material is further adapted to moist the gas injector.

This may further enhance the operation of the valve unit, in particular if the gas injector is provided as an inflating needle, since the needle can then be more easily inserted and removed from the valve unit due to a reduced coefficient of friction.

A further embodiment of the present invention relates to a valve for an inflatable body, in particular a bladder for a sports ball, that comprises a valve unit according any of the preceding embodiments. The resulting modular design of the valve facilitates the integration of a valve unit according to the present invention into already existing valve designs.

For example, if the outer dimensions of the valve unit are adapted such that they correspond to already existing valve bodies that are used for inflatable bodies such as bladders for sports balls, the overall design of the valve body, the bladder and / or the sports ball can remain essentially unchanged. As a consequence, additional engineering efforts are avoided and a quick adaptation of the respective manufacturing processes and / or tools can be achieved.

A further embodiment of the present invention is directed to an inflatable bladder, in particular a bladder for a sports ball that comprises a valve unit and / or a valve according to any of the preceding embodiments.

A further embodiment of the present invention is directed to a ball, in particular a sports ball, comprising a valve unit, a valve and / or an inflatable bladder according to any of the preceding embodiments.

For example, a sports ball comprising an enhanced valve unit / valve / inflatable bladder as provided by the present invention can be more conveniently filled with air, while at the same time gas leakage and the risk to damage the valve by inserting the inflating needle is reduced. In this way, the comfort of use, the performance as well as the life-time of operation of the respective sports ball can be increased significantly.

### 4. Short Description of the Figures

Aspects of the present invention are described in more detail in the following by reference to the accompanying figures. These figures show:
- Fig. 1:: cross-sectional view of a valve for ball bladders known form the prior art (US7,517,294B2);
- Fig. 2:: cross-sectional view of a valve unit according to an embodiment of the present invention;
- Fig. 3:: cross-sectional view of a valve according to another embodiment of the present invention;
- Fig. 4:: cross-sectional view of a valve during operation according to an embodiment of the present invention
- Fig. 5:: cross-sectional view of a valve according to a further embodiment of the present invention
- Fig. 6:: cross-sectional view of an inflatable body according to a further embodiment of the present invention

### 5. Detailed Description of the Figures

In the following, exemplary embodiments of the present invention of valve unit for a valve of an inflatable body are illustrated referring to a valve for a bladder of a sports ball. However, it is to be understood that the present invention is not limited to such a specific valve unit and application but could also be applied to other inflatable bodies, such as tire tubing, inflatable mattresses, leisure activity equipment, various types of protection gear, inflatable advertising equipment, and many more.

Moreover, while specific feature combinations are described in the following with respect to certain embodiments of the present invention, it is to be understood that the disclosure is not limited to such embodiments. In other words, not all the described features have to be present for realizing the invention and the embodiments may be modified by combining certain features of one embodiment with one or more features of another embodiment.

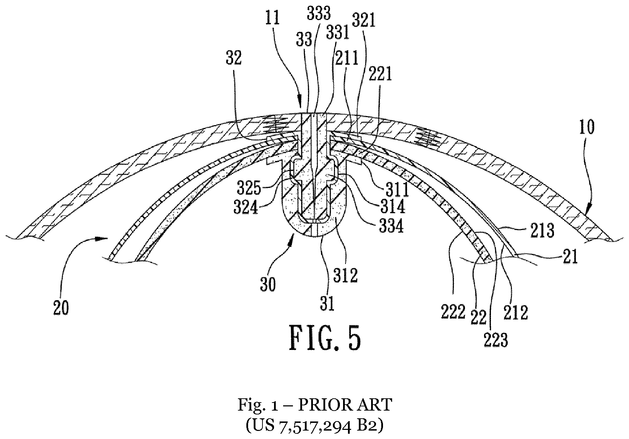

Fig. 1 shows a valve design known form the prior art (i.e. the US 7,517,294 B2) for a sports ball and is described above in section 2, "Technical Background".

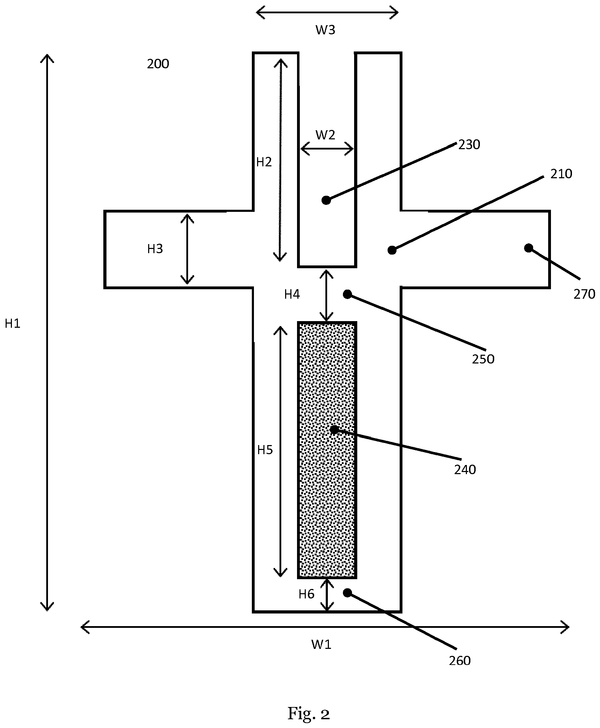

Fig. 2 shows a cross-sectional view of a valve unit according to an embodiment of the present invention. The valve unit 200 may be rotational symmetric around a center axis and comprises a body 210 and an opening 230 that is adapted to receive a gas injector such as an inflation needle - a tool commonly used to inflate sports balls such as footballs and basket balls. The body 210 of the valve unit 200 may comprise various materials well-known in the art such as rubber, plastic, or similar materials and may be produced by conventional manufacturing methods such as injection molding or similar methods.

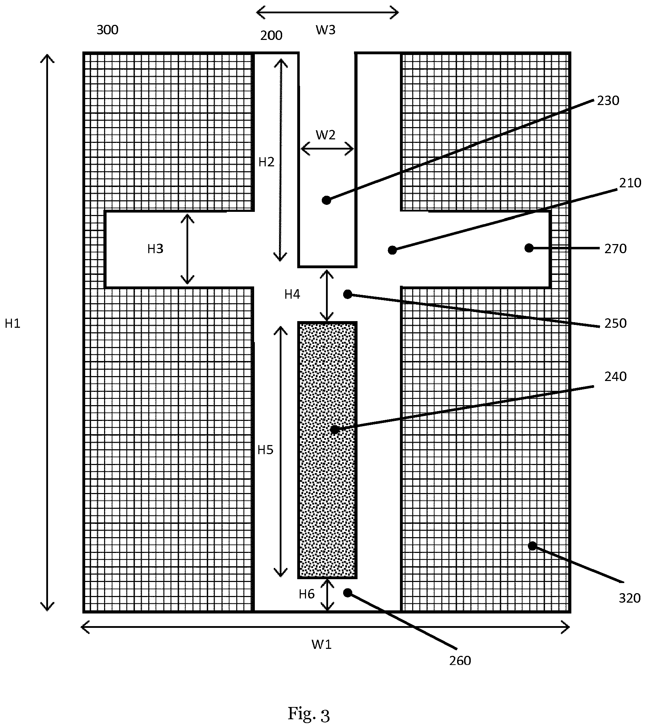

For the illustrated embodiment, the opening 230 is arranged on the top and essentially along the center axis of the valve unit 200. The valve unit 200 further comprises a portion of larger diameter 270 that may serve to mount the valve unit inside a valve body (see Fig. 3).

A cavity 240 is arranged inside the lower portion of the body 210 of the valve unit 200. The cavity 240 comprises a viscous, non-solid material such as a gel (e.g. a silica gel comprising SiO₂ and polyurethane). Other viscous materials and in particular gels are also conceivable having at least the property to become compact again after removal of the inflating needle.

The viscous, non-solid material may either be in direct contact with the inner walls of the cavity 440 or may be contained in a pack or pad. For example, if the viscous, non-solid material comprises a gel, the gel may be contained in a gel pack which in turn comprises a surface layer such as a polymer coating for example comprising thermoplastic polyurethane (TPU) or any other polymer or plastic suitable for forming the surface coating of a gel pack.

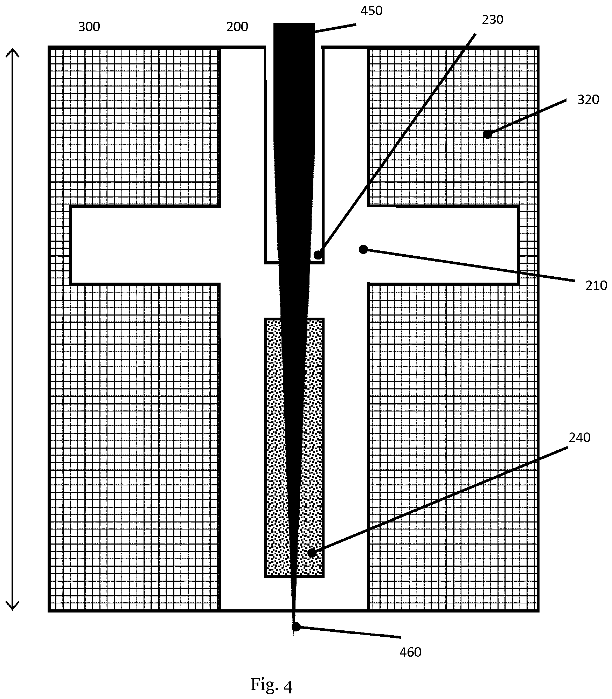

In particular, the surface coating should be configured such that it can be reliably be penetrated by a gas injector (see Fig. 4) that is used to inject gas into the interior of the respective inflatable body. Moreover, the surface coating should be configured such, that the gel is reliably contained in the gel pack after the gas injector is removed again from the valve unit 200.

Providing the viscous, non-solid material inside a dedicated / preconfigured pack or pad offers the advantage that the valve unit 200 can be assembled without dedicated handling capabilities (machines, personnel, etc.) required for handling the viscous, non-solid material during assembly. For example, preconfigured gel packs may even be sourced from specialized suppliers. In particular, it could be possible to use gel packs that are already available and have been designed for general, high volume applications.

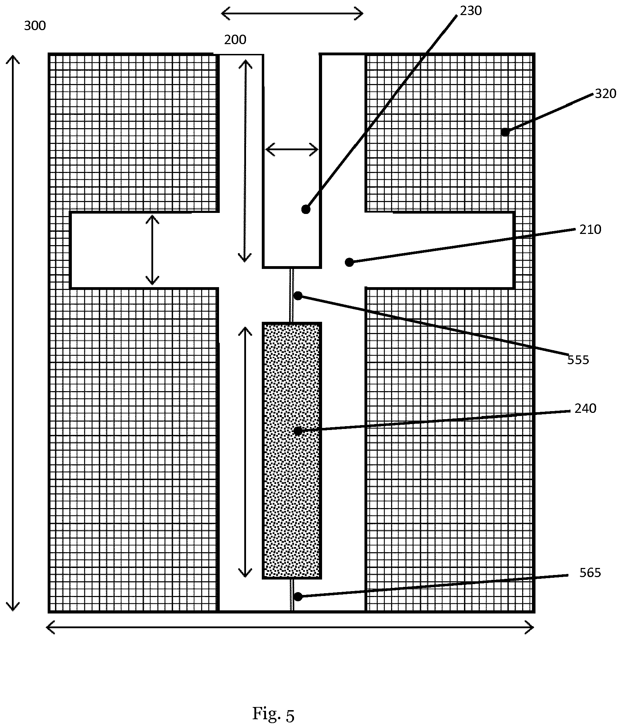

In between the lower end of opening 230 and the upper end of the cavity 240 there is an upper section 250 of the cavity wall. Said upper section 250 is configured such that it can also be penetrated by a gas injector such as an inflation needle. In some embodiments of the present invention the upper section 250 of the cavity wall is adapted to be pierced by the respective gas injector when the valve is used the first time, whereas in other embodiments the upper section 250 is designed such that it comprises a centrally arranged channel (see Fig. 5) which may be used to guide the gas injector through the cavity 240 and can be spread apart when the gas injector is inserted into the valve unit 200 through the opening 230.

In some embodiments, the shape of the cavity 240 is essentially a cylinder. The height of the cavity H5 may be between imm and 20mm, preferably between 4mm and 16mm, more preferably between 6mm and 14mm and most preferably between 8mm and 12mm, and wherein the width W2 of the cavity may be between 0,5mm and 10mm, preferably between 0,75mm and 6mm, more preferably between imm and 4 mm and most preferably between 1,5mm and 3mm.

In other embodiments the shape of the cavity 240 may also be essentially an ellipsoid, wherein the length of the semi-major axis is between 4mm and 16mm, preferably between 6mm and 14mm, more preferably between 8mm and 12mm and most preferably between 9mm and 11mm, and wherein the length of the semi-minor axis is between 0,5mm and 6mm, preferably between 0,75mm and 5mm, more preferably between imm and 4mm and most preferably between 1,5mm and 3mm.

However, the cavity may have any geometrical shape and dimensions that are configured to be penetrated by a gas injector and to seal the valve unit gas-tight after the gas injector is removed again from the valve unit.

In particular, the dimensions of the cavity in the plane perpendicular to the penetration direction of the gas injector (e.g. the plane perpendicular to the central axis of the valve unit) may not be significantly smaller than the dimensions of the part of the gas injector that penetrates the cavity. For example, the width W2 of the cavity 240 should be not much smaller than the maximal width of the gas injector or the maximal width of the section of the gas injector that penetrates the cavity.

Further, the height H5 of the cavity 240 should be large enough such that the gas-tight sealing of the valve can be reliably ensured.

At the lower end of the valve unit 200, the cavity 240 is confined by a lower section 260 of the cavity wall which is also adapted to be penetrated by a gas injector. In some embodiments of the present invention the lower section 260 of the cavity wall is adapted to be pierced by the respective gas injector when the valve unit 200 is used the first time, whereas in further embodiments the lower section 260 is designed such that it further comprises a centrally arranged channel (see Fig. 4) that is used to guide the gas injector towards the interior of the respective inflatable body and which may be spread apart when the gas injector is inserted into the valve unit 200.

The upper section 250 of the cavity wall and / or the lower section 260 of the cavity wall may also contribute to the sealing function of the valve unit 200. In particular, the valve body 210 and / or the upper and / or the lower section of the cavity wall may comprise a material such as rubber or plastic that for example may also be used in conventional valve designs known from the prior art (see e.g. Fig. 1).

Thus, supplementary to the sealing function provided by the viscous, non-solid material contained in the cavity 240 the valve unit 200 may also implement - at least in part - a similar sealing mechanism as valve designs known form the prior art (i.e. the upper 250 and lower 260 sections of the cavity wall do also contribute to sealing of the valve unit 200)

Consequently, the overall performance of the valve unit 200 may be further enhanced, since the at least two different sealing mechanisms (i.e. sealing by a solid material and sealing by a viscous, non-solid material) may complement each other and / or may each compensate the respective weak points of the other.

In one embodiment, the dimensions of the valve unit 200 are essentially given by:

| | | | |
|---|---|---|---|
| H1: | 20mm, | H2: | 6mm |
| H3: | 4mm, | H4: | 2mm |
| H5: | 10mm, | H6: | 2mm |
| W1: | 15mm, | W2: | 2mm |
| W3: | 6mm | | |

These dimensions are given to illustrate the overall dimensions of a specific embodiment of the present invention. It should be noted however, that some or all dimensions of other embodiments may be different from the ones given above and the dimensions of the valve unit may depend on the intended application of the valve unit (e.g. be determined by the size of the ball, the dimensions and / or type of the gas injector, the type of viscous material etc.).

Fig. 3 shows a valve 300 that comprises the valve unit 200 from Fig. **2****.** and a valve body 320. The portion of larger diameter 270 of the body 210 of the valve unit 200 is arranged in a recess of the valve body 320, such that the body 210 of the valve unit 200 is hold in position with respect to the valve body 320 when a gas injector such as an inflation needle is inserted into the valve 300. The valve body 320 may comprise the same material as the body 210 of the valve unit 200 or may also comprise a different material.

In particular, the body 210 of the valve unit 200 may comprise a slightly softer material than the valve body 320. For example, the body 210 may comprise rubber and the valve body 320 may comprise a molded polymer such as thermoplastic polyurethane or nylon or any other material known in the art.

Moreover, the dimensions and the material of the valve body 320 may be identically or similar to conventional valve bodies known from the art. In particular, the novel valve unit shown in Fig. 2 may be readily integrated into existing valve bodies without significant changes to the design and / or manufacturing process of the respective valve.

Fig. 4 depicts the valve 300 of Fig. 3 comprising the valve unit 200 of Fig. 2 during operation i.e. while being used to fill an inflatable body with gas.

In addition to the structural elements described above (200, 300, 210, 320, 230 240) an inflation needle 450 is shown, that completely penetrates the valve unit 210 which is hold in place by the valve body 320. The tip 460 of the inflation needle 450 protrudes from the lower section of the wall of the cavity 240 into the interior of the inflatable body (not shown).

The opening 230 of the valve unit 200 is configured to receive the inflation needle 450 and / or guide it along a central axis of the valve 300. In some embodiments, the inflation needle 450 thus penetrates the cavity 240 essentially along the central axis of the cavity.

In this way, the minimal distance between the gas injector 450 and the walls of the cavity 240 (i.e. the space that is filled with the viscous, non-solid material) is maximized.

The viscous, non-solid material that is contained inside the cavity 240 is adapted to seal the valve unit 200 gas-tight during all states of operation of the valve 300 i.e. prior to insertion of the inflation needle 450, while the inflation needle 450 is penetrating the cavity 240 and after the inflation needle 450 has been removed from the valve 300.

The composition of the viscous, non-solid material inside the cavity 240 may be chosen such that the viscosity of the viscous, non-solid material is high enough such that the viscous, non-solid material does not leak out of the cavity 240 of the valve 300, but at the same time low enough to facilitate penetration by the inflation needle 450. The viscosity should also be low enough to ensure that the viscous, non-solid material relaxes back (e.g. flows back) fast enough into its original configuration, in order to ensure immediate or near-immediate gas-tight sealing of the valve unit 200 after the inflation needle 450 is removed from the valve 300. For example, the viscous, non-solid material may comprise a gel, such as a xerogel or hydrogel and in particular a silica gel and / or a gel comprising SiO₂ and polyurethane.

In particular, such gel may be heat resistant up to a certain temperature e.g. 300°C thereby rendering the sealing mechanism provided by the invention essentially unaffected by the heat caused by friction when inserting the gas injector or inflation needle into the valve unit.

As can be seen from the illustration of the valve 300 during operation, the viscous, non-solid material essentially decouples the sealing function of the valve 300 from its mechanical requirements (i.e. to house the valve unit 200, to attach the valve 300 to the respective inflatable body, to receive and guide the gas injector 450 etc.). Consequently, both functions can be optimized independently and thus, overall valve performance can be increased significantly.

Fig. 5 illustrates another embodiment of a valve 300 according to the present invention. In addition to the structural elements shown in Fig. 3 and Fig. 4 the body 210 of the valve unit 200 comprises a first 555 and a second channel 565 that extend through the upper and the lower wall section of the cavity 240. Said channels are configured to receive and guide the tip of a gas injector such as the tip of an inflation needle (see Fig. 4) through the cavity 240 and towards the interior of the respective inflatable body.

In some embodiments, the channels 555, 565 are created during manufacturing of the body 210 of the valve unit 200. In other embodiments, the channels 555, 565 are created when the inflation needle is inserted into the valve unit 200 for the first time and the tip of the inflation needle punctures the upper and the lower wall of the cavity 240 while penetrating the valve unit 200.

Providing the channels 555, 565 already during manufacturing facilitates using the valve 300 for the first time and may reduce the risk of damaging the valve unit by inserting the inflation needle.

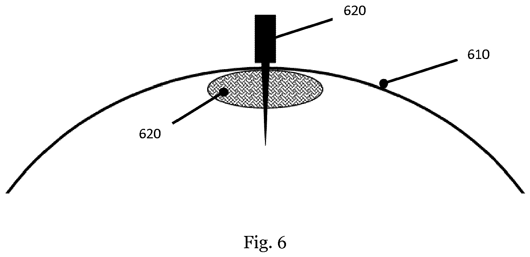

Fig. 6 depicts another valve design for an inflatable body 610 according to an embodiment of the present invention. Instead of a valve 300 as illustrated in Figs. 3 - 5 it is also possible to design the valve such that it essentially comprises a pad 620 that contains a viscous, non-solid material and that comprises an outer surface layer that is adapted to be penetrated by a gas injector 620 such as an inflation needle.

The pad 620 may be arranged on the inside of an inflatable body 610 such as a bladder of a sports ball. The pad 620 is further arranged such that it covers an opening in the hull of the inflatable body 610 and is configured such that the opening is sealed gas-tight when the gas injector 620 is not penetrating the opening and the pad 620 containing the viscous, non-solid material.

As described above with reference to Fig. 2 the viscous, non-solid material may comprise a gel and the pad 620 may be a gel pack. This embodiment of the present invention may be particularly useful for applications for which a low weight of the valve, low production costs and ease of manufacture is critical.

## Claims

1. Valve unit (200) for a valve (300) of an inflatable bladder for a sports ball, the valve unit (200) comprising:
a. a cavity (240) containing a viscous, non-solid material, the cavity (240) being adapted to be repeatedly penetrated by a gas injector (450),
b. wherein the viscous, non-solid material is adapted to seal the valve unit (200) against gas leakage when the gas injector (450) is not penetrating the cavity (240),
**characterized in that**
c. the viscous, non-solid material exhibits a viscosity at a temperature of 25°C in the range of 0,005 m²/s to 0,1 m²/s (5,000 cSt to 100,000 cSt).

2. Valve unit (200) according to claim 1, wherein the viscous, non-solid material comprises a gel.

3. Valve unit (200) according to any of the preceding claims, wherein the cavity (240) comprises at least a first wall section (250) that can be penetrated by the gas injector (450) and which seals the cavity (240) against a leakage of the viscous, non-solid material, when the gas injector (450) is not penetrating the at least first wall section (250).

4. Valve unit (200) according to the preceding claim, wherein the at least first wall section (250) is arranged in between the cavity (240) and the exterior of the bladder.

5. Valve unit (200) according to any of the preceding claims, wherein an at least second wall section (260) is arranged in between the cavity (240) and the interior of the bladder.

6. Valve unit (200) according to any of the preceding claims 3 - 5, wherein the first (250) and / or the second wall section (260) has a thickness of 0,25 mm - 5 mm, preferably 0,5mm - 4 mm, more preferably 1 mm - 3 mm and most preferably between 1,5 mm and 2,5 mm.

7. Valve unit (200) according to any of the preceding claims 4 - 6, wherein a first channel (555) and / or a second channel (565) is arranged in the at least first wall section (250) and / or the at least second wall section (260), wherein the at least first channel (555) connects the cavity (240) to the exterior of the inflatable bladder and / or the second channel (565) connects the cavity (240) to the interior of the inflatable bladder.

8. Valve unit (200) according to any of the preceding claims, wherein the height (H5) of the cavity (240) is between imm and 20mm, preferably between 4mm and 16mm, more preferably between 6mm and 14mm and most preferably between 8mm and 12mm, and wherein the width (W2) of the cavity is between 0,5mm and 10mm, preferably between 0,75mm and 6mm, more preferably between 1mm and 4 mm and most preferably between 1,5mm and 3mm.

9. Valve unit (200) according to any of the preceding claims, wherein the viscous, non-solid material is contained in a preconfigured pad.

10. Valve unit (200) according to any of the preceding claims, wherein the viscous, non-solid material is further adapted to moist the gas injector (450).

11. Valve unit (200) according to any of the preceding claims, wherein the cavity (240) containing the viscous, non-solid material is adapted to be repeatedly penetrated by a gas injector (450) provided as an inflating needle.

12. Valve (300) for a bladder for a sports ball, comprising a valve body (320) adapted to house a valve unit (200) according to any of the preceding claims.

13. Inflatable bladder (610) for a sports ball comprising a valve (300) according to claim 12 or a valve unit (200) according to any of the claims 1 - 11.

14. Sports ball, comprising a valve unit (200), a valve (300) and / or an inflatable bladder (610) according to any of the preceding claims.

## Patentansprüche

1. Ventileinheit (200) für ein Ventil (300) einer aufblasbaren Blase für einen Sportball, wobei die Ventileinheit (200) umfasst:
a. einen Hohlraum (240), der ein viskoses, nicht festes Material enthält, wobei der Hohlraum (240) dazu eingerichtet ist, wiederholt von einem Gasinjektor (450) durchdrungen zu werden,
b. wobei das viskose, nicht feste Material so eingerichtet ist, dass es die Ventileinheit (200) gegen Gasleckage abdichtet, wenn der Gasinjektor (450) den Hohlraum (240) nicht durchdringt, **dadurch gekennzeichnet, dass**
c. das viskose, nicht feste Material bei einer Temperatur von 25°C eine Viskosität im Bereich von 0,005 m²/ s bis 0,1 m² / s (5.000 cSt bis 100.000 cSt aufweist.

2. Ventileinheit (200) nach Anspruch 1, wobei das viskose, nicht feste Material ein Gel umfasst.

3. Ventileinheit (200) nach einem der vorstehenden Ansprüche, wobei der Hohlraum (240) mindestens einen ersten Wandabschnitt (250) aufweist, der von dem Gasinjektor (450) durchdrungen werden kann und der den Hohlraum (240) gegen eine Leckage des viskosen, nicht festen Materials abdichtet, wenn der Gasinjektor (450) den mindestens ersten Wandabschnitt (250) nicht durchdringt.

4. Ventileinheit (200) nach dem vorhergehenden Anspruch, wobei der mindestens eine erste Wandabschnitt (250) zwischen dem Hohlraum (240) und der Außenseite der Blase angeordnet ist.

5. Ventileinheit (200) nach einem der vorhergehenden Ansprüche, wobei zumindest ein zweiter Wandabschnitt (260) zwischen dem Hohlraum (240) und dem Inneren der Blase angeordnet ist.

6. Ventileinheit (200) nach einem der vorhergehenden Ansprüche 3 - 5, wobei der erste (250) und/oder der zweite Wandabschnitt (260) eine Dicke von 0,25 mm - 5 mm, vorzugsweise 0,5 mm - 4 mm, noch bevorzugter 1 mm - 3 mm und am meisten bevorzugt zwischen 1,5 mm und 2,5 mm aufweist.

7. Ventileinheit (200) nach einem der vorhergehenden Ansprüche 4 - 6, wobei ein erster Kanal (555) und/oder ein zweiter Kanal (565) in dem mindestens ersten Wandabschnitt (250) und/oder dem mindestens zweiten Wandabschnitt (260) angeordnet ist, wobei der mindestens eine erste Kanal (555) den Hohlraum (240) mit dem Äußeren der aufblasbaren Blase verbindet und/oder der zweite Kanal (565) den Hohlraum (240) mit dem Inneren der aufblasbaren Blase verbindet.

8. Ventileinheit (200) nach einem der vorstehenden Ansprüche, wobei die Höhe (H5) des Hohlraums (240) zwischen 1 mm und 20 mm, vorzugsweise zwischen 4 mm und 16 mm, besonders bevorzugt zwischen 6 mm und 14 mm und am meisten bevorzugt zwischen 8 mm und 12 mm beträgt und wobei die Breite (W2) des Hohlraums zwischen 0,5 mm und 10 mm, vorzugsweise zwischen 0,75 mm und 6 mm, besonders bevorzugt zwischen 1 mm und 4 mm und am meisten bevorzugt zwischen 1,5 mm und 3 mm beträgt.

9. Ventileinheit (200) nach einem der vorstehenden Ansprüche, wobei das viskose, nicht feste Material in einem vorkonfigurierten Kissen enthalten ist.

10. Ventileinheit (200) nach einem der vorstehenden Ansprüche, wobei das viskose, nicht feste Material ferner dazu eingerichtet ist, den Gasinjektor (450) zu befeuchten.

11. Ventileinheit (200) nach einem der vorhergehenden Ansprüche, wobei der Hohlraum (240), der das viskose, nicht feste Material enthält, dazu eingerichtet ist, wiederholt von einem Gasinjektor (450) durchdrungen zu werden, der als Aufblasnadel vorgesehen ist.

12. Ventil (300) für eine Blase für einen Sportball, mit einem Ventilkörper (320), der zur Aufnahme einer Ventileinheit (200) nach einem der vorstehenden Ansprüche eingerichtet ist.

13. Aufblasbare Blase (610) für einen Sportball, umfassend ein Ventil (300) nach Anspruch 12 oder eine Ventileinheit (200) nach einem der Ansprüche 1 bis 11.

14. Sportball, umfassend eine Ventileinheit (200), ein Ventil (300) und/oder eine aufblasbare Blase (610) nach einem der vorstehenden Ansprüche.

## Revendications

1. Ensemble de valve (200) pour une valve (300) d'une vessie gonflable pour un ballon de sport, l'ensemble de valve (200) comprenant :
a. une cavité (240) contenant un matériau visqueux non solide, la cavité (240) étant apte à être pénétrée de façon répétée par un injecteur de gaz (450),
b. le matériau visqueux non solide étant apte à rendre étanche l'ensemble de valve (200) à l'encontre d'une fuite de gaz lorsque l'injecteur de gaz (450) ne pénètre pas la cavité (240),
**caractérisé en ce que**
c. le matériau visqueux non solide présente à une température de 25 °C une viscosité comprise dans la plage allant de 0,005 m²/s à 0,1 m²/s (5 000 cSt à 100 000 cSt).

2. Ensemble de valve (200) selon la revendication 1, dans lequel le matériau visqueux non solide comprend un gel.

3. Ensemble de valve (200) selon l'une des revendications précédentes, dans lequel la cavité (240) comprend une première partie de paroi (250) qui peut être pénétrée par l'injecteur de gaz (450) et qui rend étanche la cavité (240) à l'encontre d'une fuite du matériau visqueux non solide lorsque l'injecteur de gaz (450) ne pénètre pas l'au moins première partie de paroi (250).

4. Ensemble de valve (200) selon la revendication précédente, dans lequel l'au moins première partie de paroi (250) est agencée entre la cavité (240) et l'extérieur de la vessie.

5. Ensemble de valve (200) selon l'une des revendications précédentes, dans lequel une au moins seconde partie de paroi (260) est agencée entre la cavité (240) et l'intérieur de la vessie.

6. Ensemble de valve (200) selon l'une des revendications 3 à 5 précédentes, dans lequel la première (250) et/ou la seconde (260) partie de paroi présentent une épaisseur de 0,25 mm à 5 mm, de préférence 0,5 mm à 4 mm, très préférablement 1 mm à 3 mm et le plus préférentiellement entre 1,5 mm et 2,5 mm.

7. Ensemble de valve (200) selon l'une des revendications 4 à 6 précédentes, dans lequel un premier canal (555) et/ou un second canal (565) sont agencés dans l'au moins première partie de paroi (250) et/ou dans l'au moins seconde partie de paroi (260), dans lequel au moins le premier canal (555) relie la cavité (240) à l'extérieur de la vessie gonflable et/ou le second canal (565) relie la cavité (240) à l'intérieur de la vessie gonflable.

8. Ensemble de valve (200) selon l'une des revendications précédentes, dans lequel la hauteur (H5) de la cavité (240) est comprise entre 1 mm et 20 mm, de préférence entre 4 mm et 16 mm, plus préférablement entre 6 mm et 14 mm et le plus préférentiellement entre 8 mm et 12 mm, et dans lequel la largeur (W2) de la cavité est comprise entre 0,5 mm et 10 mm, de préférence entre 0,75 mm et 6 mm, plus préférablement entre 1 mm et 4 mm et le plus préférentiellement entre 1,5 mm et 3 mm.

9. Ensemble de valve (200) selon l'une des revendications précédentes, dans lequel le matériau visqueux non solide est contenu à l'intérieur d'une pastille préconfigurée.

10. Ensemble de valve (200) selon l'une des revendications précédentes, dans lequel le matériau visqueux non solide est en outre apte à humidifier l'injecteur de gaz (450).

11. Ensemble de valve (200) selon l'une des revendications précédentes, dans lequel la cavité (240) contenant le matériau visqueux non solide est apte à être pénétrée de façon répétée par l'injecteur de gaz (450) se présentant sous forme d'une aiguille de gonflage.

12. Valve (300) pour une vessie destinée à un ballon de sport, comprenant un corps de valve (320) apte à loger un ensemble de valve (200) selon l'une des revendications précédentes.

13. Vessie gonflable (610) destinée à un ballon de sport, comprenant une valve (300) selon la revendication 12 ou un ensemble de valve (200) selon l'une des revendications 1 à 11.

14. Ballon de sport comprenant un ensemble de valve (200), une valve (300) et/ou une vessie gonflable (610) selon l'une des revendications précédentes.
